# EUROPÄISCHE PATENTANMELDUNG

(11) **EP 0 808 646 A1**
(43) Veröffentlichungstag der Anmeldung: **26.11.1997**
(21) Anmeldenummer: 97250153.0
(22) Anmeldetag: 08.05.1997
(51) Int. Cl.: B01D 21/18

(54) **Unterwasser-Räumer für Rundklärbecken**

(30) Priorität: 17.05.1996 DE 29609366 U
(71) Anmelder: Anlagenbau Völkl, 92637 Weiden (DE)
(72) Erfinder: Völkl, Max, 92718 Schmitz (DE); Wurm, Alfred, 95689 Fuchsmühl (DE)
(74) Vertreter: Voigt, Günter, Dipl.-Ing.

(57) **Zusammenfassung**

Es wird ein Unterwasser-Räumer für ein Rundklärbecken (10) mit einem an der Beckensohle (11) entlangstreichenden Räumschild (14) beschrieben, das in der Draufsicht sprialförmig ausgebildet ist und sich über etwa einen halben bis anderthalb Umfang des Beckens erstreckt.

## Beschreibung

Die Erfindung bezieht sich auf einen Unterwasser-Räumer für Rundklärbecken gemäß Oberbegriff des Anspruchs 1.

Aus DIN 19 552, Blatt 1 sind Schild-Räumer für Rundbecken von Kläranlagen bekannt, bei denen ein Räumschild am trichterförmig ausgebildeten Beckenboden eine Rotationsbewegung ausführt und so den Sinkschlamm abräumt, der dann im trichterförmig ausgebildeten Beckenboden zu dessen tieferliegender Mitte wandert und dort abgeführt wird.

Auch in der DE-0S 42 22 559 wird ein Rundklärbecken mit trichterförmigem Beckenboden beschrieben.

Aus der DE-AS 1 003 144 ist eine Absetzvorrichtung zum Klären oder Eindicken von Trübenn bekannt, die aus einem Absetzbehälter mit trichterförmigem Boden 14 besteht. Am Boden des geneigten Bodens 14 ist ein spiralförmiger Kratzer für die Abführung der abgesetzten Feststoffe zum Auslaß in der Mitte des Behälters vorhanden.

Aus dem DE-GM 41 359 ist ein Spiralkratzer zur Schlammausräumung in einem Klärbecken bekannt, dessen Beckensohle 9 ebenfalls trichterförmig ausgebildet ist.

Schließlich ist aus dem DE-GM 76 30 039 eine Rundräumerbrücke für Klärbecken mit einem kurvenförmig ausgebildeten Bodenräumschild bekannt, wobei der Beckenboden 8 ebenfalls geneigt ist und damit trichterförmige Gestalt hat.

Die Herstellung des trichterförmigen Beckenbodens bereitet zwar erhebliche fertigungstechnische Probleme, da der erstarrende Beton daran gehindert werden muß, eine waagererecht verlaufende Oberfläche zu bilden, dennoch wurde ein trichterförmiger Beckenboden offenbar als unumgänglich angesehen, um den Transport des Sinkschlamms zur Mitte hin zu gewährleisten.

Der Erfindung liegt die Aufgabe zugrunde, einen Unterwasser-Räumer für den Sinkschlamm in einem Rundklärbecken zu schaffen, der auch bei einem ebenen Beckenboden einen wirksamen Transport des Sinkschlamms am Beckenboden zur Mitte gewährleistet.

Die Lösung dieser Aufgabe erfolgt mit den Merkmalen des Anspruchs 1.

Vorteilhafte Ausgestaltungen ergeben sich aus den Unteransprüchen.

Die Erfindung wird nachfolgend anhand der Zeichnungsfiguren erläutert. Es zeigen:
- Fig. 1: einen Räumer für den Sinkschlamm eines Rundklärbeckens mit ebenem Beckenboden im Querschnitt,
- Fig. 2: eine Draufsicht auf den Räumer gemäß Fig. 1,
- Fig. 3: einen Räumer gemäß Fig. 1 und 2 mit Antrieb über eine Endloskette im Querschnitt,
- Fig. 4: einen Räumer gemäß Fig. 3 in Draufsicht,
- Fig. 5: einen Räumer gemäß Fig. 1 und 2 mit Antieb über einen feststehenden Motor am oberen Beckenrand, Zahnkranz und Ritzel im Querschnitt,
- Fig. 6: einen Räumer gemäß Fig. 5 in Draufsicht,
- Fig. 7: Querschnittsdarstellung eines Räumer mit S-förmiger Gestalt, der mittels eines in einer Spur umlaufenden Motors über eine Schleppeinrichtung den Antrieb des Räumers bewirkt im Querschnitt,
- Fig. 8: einen Räumer gemäß Fig. 7 in Draufsicht sowie
- Fig. 9: einen Räumer mit einer zusätzlichen Querfördereinrichtung im Querschnitt.

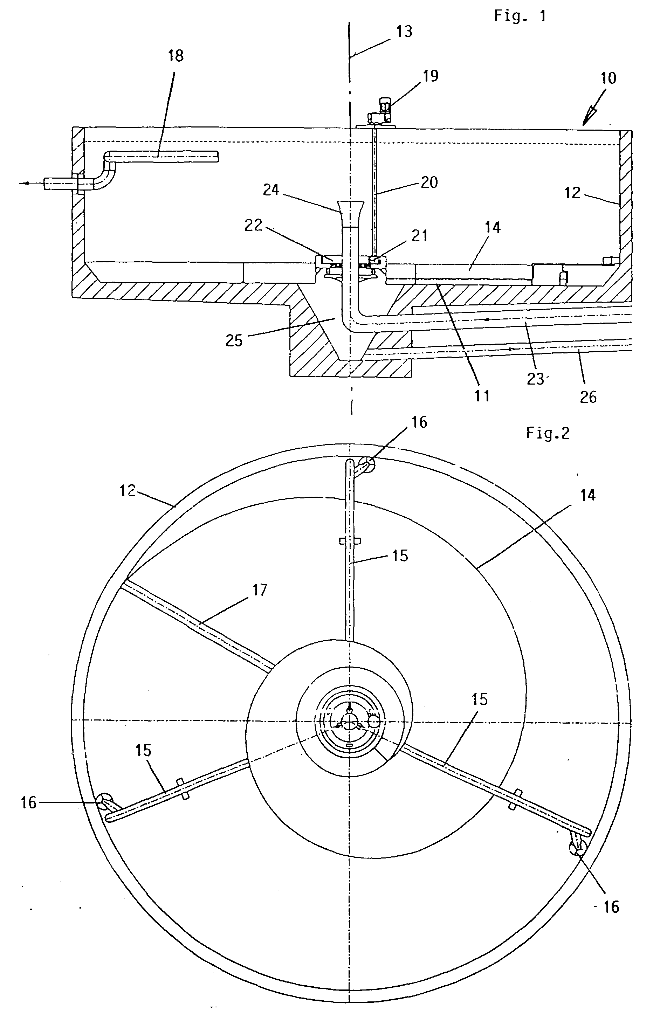

In Fig.1 ist ein Rundklärbecken 10 mit Beckensohle 11 und Beckenwand 12 im Querschnitt dargestellt. Das Rundklärbecken 10 ist grundsätzlich rotationssymmetrisch aufgebaut mit der Achse 13 als Rotationsachse.

Die Beckensohle 11 ist eben und waagerecht. Der Sinkschlamm, der sich aus dem Schmutzwasser auf der Beckensohle 11 absetzt, wird von einem Räumschild 14 erfaßt, das mit seiner Unterseite in nur geringem Abstand von wenigen Millimetern über die Beckensohle 11 geführt wird. Bei Bedarf können auf der Unterseite des Räumschilds 14 auch zusätzlich noch Gummilippen angebracht werden. Normalerweise ist dies jedoch nicht erforderlich. Durch die spiralförmige Gestalt des Räumschilds 14, wie sie sich aus der Draufsicht gemäß Fig. 2 ergibt, wirkt auf den auf der Beckensohle 11 abgelagerten Sinkschlamm neben der peripheren auch eine starke Zentripetal-Komponente, die den Transport des Sinkschlamms in Richtung Mitte der Beckensohle 11 bewirkt. Das Räumschild 14 wird über Stützarme 15 und an ihren peripheren Enden angeordnete Stützrollen 16 an der Beckenwand 12 geführt. Außerdem wird das äußere Ende der Spirale des Räumschilds 14 über einen Tragarm 17 gehalten. Das spiralförmige Räumschild 14 kann sich über nur einen Teil eines vollen Umfangs, aber auch über mehr als einen vollen Umfang des Beckens erstrecken. In Abhängigkeit von der Gestalt der Spirale des Räumschilds 14 ergeben sich unterschiedliche Verhältnisse zwischen peripherer und Zentripetal-Komponente der auf den Sinkschlamm wirkenden Kraft.

Das vom Sinkschlamm befreite Abwasser wird über eine Abflußleitung 18 abgeführt.

Die Bewegung des spiralförmigen Räumschilds 14 erfolgt beispielsweise über einen in Zentrumsnähe angeordneten, feststehenden Motor 19, der über eine Antriebswelle 20 und ein Ritzel 21 einen mit dem Räumschild 14 verbundenen Zahnkranz 22 und damit auch das Räumschild 14 antreibt.

Die grundsätzliche Funktion des Rundklärbeckens ist wie folgt:
Über eine Zulaufleitung 23 wird das zu klärende Abwasser einem mittig im Rundklärbecken 10 angeordneten, tulpenförmig endenden Zulaufrohr 24 zugeführt. Von dort breitet sich das Abwasser unter erheblicher Verringerung der Strömungsgeschwindigkeit in radialer Richtung aus. Durch die verringerte Strömungsgeschwindigkeit setzen sich die Feststoffe ab und sammeln sich auf Beckensohle 11. Dort wird der so entstehende Sinkschlamm vom rotierenden spiralförmigen Räumschild 14 aufgrund dessen besonderer Gestaltung nicht nur in Umfangsrichtung, sondern auch mit einer starken zentripetalen Komponente in Richtung Mitte der Beckensohle 11 und damit in Richtung auf einen Sammeltrichter 25 für den Sinkschlamm bewegt. Über eine Ausgangsleitung 26 wird der gesammelte Sinkschlamm abgeführt.

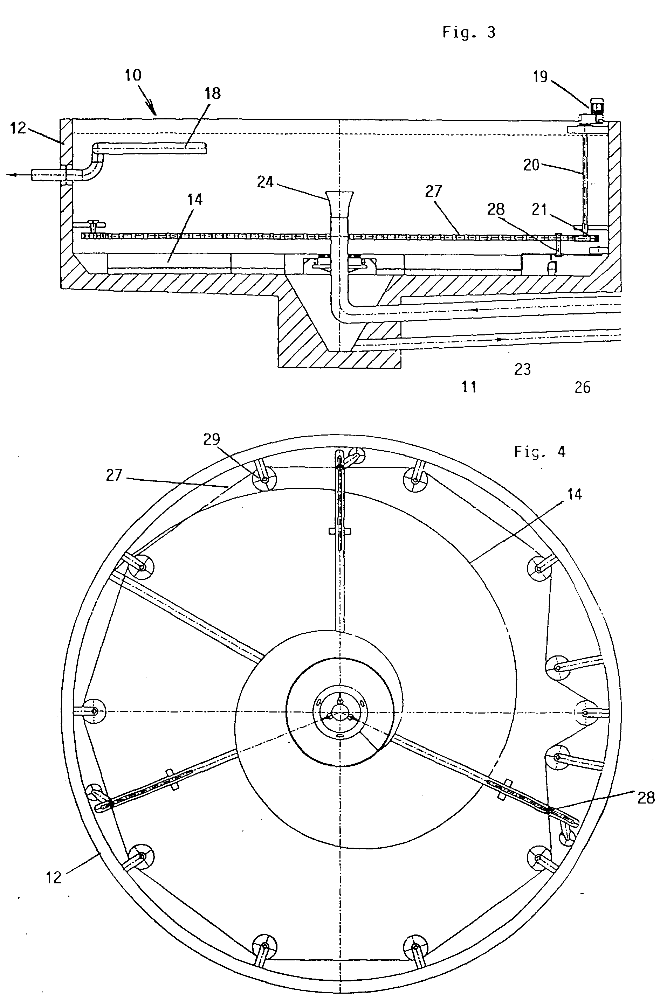

In der Fig. 3 ist eine Variante des Rundklärbeckens 12 dargestellt, bei der der Antrieb des Räumschildes 14 über einen an der Beckenwand 12 fest angeordneten Motor 19 sowie über eine Antriebswelle 20 und ein Ritzel 21 auf eine gemäß Fig. 4 über Umlenkrollen 29 geführte Endloskette 27 mit einem Durchmesser nur geringfügig kleiner als der des Rundklärbeckens 10 erfolgt. Diese Endloskette 27 ist über eine geeignete Festverbindung, beispielsweise über einen Stift 28 oder eine kurze Seil-bzw. Kettenverbindung, mit dem anzutreibenden Räumschild 14 verbunden.

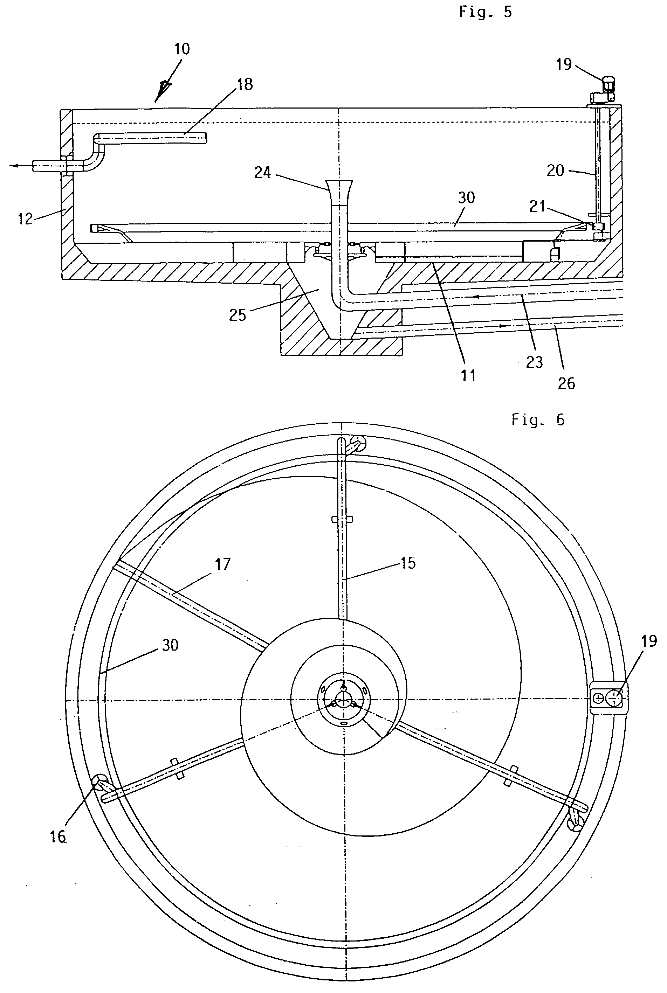

Die Fig. 5 und 6 zeigen Querschnitt und Draufsicht auf eine Anordnung mit Motor 19, Antriebswelle 20 und Ritzel 21, das seinerseits mit einem Zahnkranz 30 in Eingriff steht.

Die zuvor geschilderten Rundklärbecken unterscheiden sich durch ihre unterschiedlichen Antriebe für das Räumschild 14. Im übrigen ist der grundsätzliche Aufbau des Rundklärbeckens in den zuvor geschilderten Fällen aber gleich.

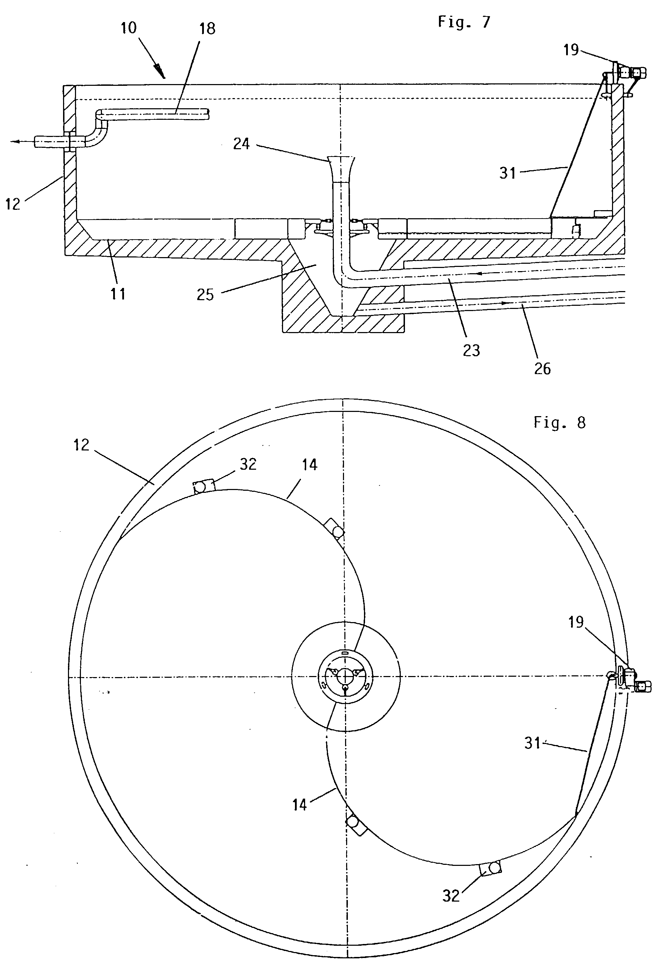

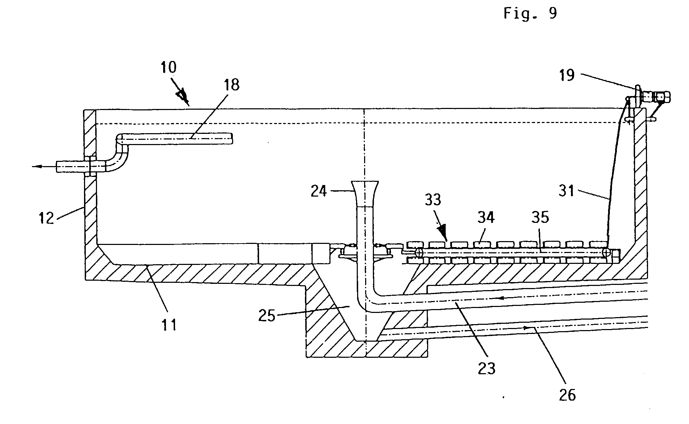

Eine weitere Variante zeigen die Fig. 7 und 8. Dort erfolgt der Antrieb des Räumschildes 14 über einen am oberen Beckenrand angeordneten Motor 19, der sich wie eine Laufkatze in einer vorgegebenen Bahn am oberen Beckenrand bewegt und über ein Seil oder ein angelenktes Gestänge 31 das Räumschild 14 mitnimmt. Dabei kann das Räumschild 14 in der Draufsicht gemäß Fig. 8 auch wie ein über den Mittelpunkt des Rundklärbeckens 10 gelegtes "S" ausgebildet sein, das an seinem Übergang von einer Links- in eine Rechtskurve im Mittelpunkt des Rundklärbeckens 10 rotationsfähig gelagert ist.

Zusätzlich kann das Räumschild 14 mit Vibratoren 32 bestückt sein, die Anlagerungen des Sinkschlamms am Räumschild 14 verhindern sollen.

Weiter kann das Räumschild 14 auch gemäß Fig. 9 teilweise zusätzlich mit einem Querförderer 33, beispielsweise einem mit kleinen Schaufeln 34 besetzten Förderband 35 bestückt sein. Der Querförderer dient ebenfalls dem Transport des Sinkschlamms zur Mitte, d.h. zum Sammeltrichter 25.

## Patentansprüche

1. Unterwasser-Räumer für ein Rundklärbecken mit einem an der Beckensohle entlangstreichenden, sich im Klärbecken vom Mittelpunkt nach außen erstreckenden, mit Motorantrieb versehenen spiralförmigen Räumschild, dadurch gekennzeichnet, daß die Beckensohle (11) des Rundklärbeckens (10) eben und waagerecht ausgebildet ist und sich das spiralförmige Räumschild über mehr als einen vollen Umfang des Beckens (10) erstreckt.

2. Unterwasser-Räumer gemäß Anspruch 1, dadurch gekennzeichnet, daß sich das spiralförmige Räumschild (14) über etwa anderthalb Umfang des Beckens erstreckt.

3. Unterwasser-Räumer gemäß einem der Ansprüche 1 oder 2, dadurch gekennzeichnet, daß ein Tragarm (17) das äußere Ende des spriralförmigen Räumschilds (14) trägt sowie Stützarme (15) und an ihren peripheren Enden angebrachte Stützrollen (16) eine radiale Fixierung und Führung des Räumschilds (14) gewährleisten.

4. Unterwasser-Räumer gemäß einem der Ansprüche 1 bis 3, dadurch gekennzeichnet, daß der Antrieb des Räumschilds (14) über einen Motor (19) mittels einer Antriebswelle (20), eines Ritzels (21) auf einen Zahnkranz (22, 30) erfolgt, der mit dem Räumschild (14) fest verbunden ist.

5. Unterwasser-Räumer gemäß einem der Ansprüche 1 bis 3, dadurch gekennzeichnet, daß der Antrieb des Räumschilds (14) über einen Motor (19) mittels einer Antriebswelle (20) und eines Ritzels (21) auf eine Endloskette (27) erfolgt, die ihrerseits mit dem Räumschild (14) verbunden ist.

6. Unterwasser-Räumer gemäß Anspruch 4, dadurch gekennzeichnet, daß der Motor etwa im Zentrum des Beckens angeordnet ist und einen Zahnkranz (22) kleineren Durchmessers antreibt.

7. Unterwasser-Räumer gemäß Anspruch 4, dadurch gekennzeichnet, daß der Motor am Beckenrand angeordnet ist und einen Zahnkranz (30) größeren Durchmessers antreibt.

8. Unterwasser-Räumer gemäß einem der Ansprüche 1 bis 3, dadurch gekennzeichnet, daß der Motor (19) auf einer Bahn am oberen Beckenrand wie eine Laufkatze beweglich angeordnet ist und über ein Seil oder ein angelenktes Gestänge (31) das Räumschild (14) mitnimmt.

9. Unterwasser-Räumer gemäß einem der Ansprüche 1 bis 8, dadurch gekennzeichnet, daß das Räumschild (14) mehrgängig ist, d.h. mehr als eine Spirale vorhanden ist.
